# EUROPÄISCHE PATENTSCHRIFT

(11) **EP 1 469 208 B1**
(45) Veröffentlichungstag und Bekanntmachung des Hinweises auf die Patenterteilung: **24.05.2006**
(21) Anmeldenummer: 04002270.9
(22) Anmeldetag: 03.02.2004
(51) Int. Cl.: F16B 39/26

(54) **Schraubelement mit einem angeformten Federelement**
Screwing element with an integrally formed spring element
Elément de vissage avec un élément intègralement formé de ressort

(30) Priorität: 19.04.2003 DE 10318023
(43) Veröffentlichungstag der Anmeldung: 20.10.2004
(73) Patentinhaber: EJOT GmbH & Co. KG, 57334 Bad Laasphe (DE)
(72) Erfinder: Friederich, Heinrich, Dr., 68649 Gross-Rohrheim (DE); Schmoock, Reinhard, 57250 Netphen-Nenkersdorf (DE)
(74) Vertreter: Eisenführ, Günther

(56) Entgegenhaltungen:
- EP-A- 0 989 311
- DE-B- 1 090 468
- US-A- 4 350 465

## Beschreibung

Die Erfindung betrifft ein Schraubelement mit einem Werkzeugangriff und einem koaxial zur Schraubachse einstückig angeformten Federelement, das mit seinem freien Rand eine zur Schraubachse senkrechte Werkstück-Anlageebene definiert, die einen axialen Abstand vom Schraubelement aufweist.

Ein zwischen einem Schraubelement, bei dem es sich um den Kopf einer Schraube oder eine Schraubenmutter handeln kann, und dem zu befestigenden Werkstück angeordnetes Federelement dient dazu, die Kraft zwischen dem Werkstück und dem Schraubelement auf Dauer aufrecht zu erhalten, welche zur Sicherung der Schraubverbindung erforderlich ist. Die Federkraft verhindert, dass aufgrund von Längenänderungen (thermisches Längen der Schraube, Schrumpfen der Werkstücke etc.) die Vorspannung der Schraubverbindung verloren geht oder mechanische Einflüsse wie Schwingungen und Erschütterungen in Folge unzureichender Reibkraft zum Aufdrehen der Schraubverbindung führen. Im Allgemeinen ist das Federelement ein separates Bauteil, das vor dem Durchstecken der Schraube durch die zu verbindenden Werkstücke auf den Schraubenschaft aufgesteckt und unterhalb des Schraubenkopfes platziert wird, oder das nach dem Durchstecken der Schraube durch die Werkstücke auf den herausragenden Gewindeabschnitt der Schraube gesteckt und zwischen Schraubmutter und angrenzendem Werkstück platziert wird. Auf diese Weise können unterschiedliche Werkstoffe mit unterschiedlichen Eigenschaften einerseits für das Schraubelement, andererseits für das Federelement eingesetzt werden.

Es ist jedoch auch bekannt, das Schraubelement mit dem Federelement einstückig herzustellen und auf diese Weise sicherzustellen, dass das Federelement nicht verloren geht oder beim Herstellen der Schraubverbindung vergessen wird. Bei der eingangs geschilderten, aus der CH-PS 101 675 bekannten Schraubenmutter besteht das Federelement aus einem balgähnlich mehrfach gekröpften Ansatz an der Stirnfläche der Schraubenmutter, der sich innerhalb des Umfangs der Mutter hält und seine Federcharakteristik durch den von den Abkröpfungen gebildeten radialen Einzug (Rücksprung) erhält. Diese Ausbildung vergrößert nicht nur die axiale Baulänge, sondern erfordert auch einen relativ hohen Herstellungsaufwand. Zudem sind Variationen der Federkennung des Federelements nur sehr eingeschränkt - wenn überhaupt - möglich. Ähnliches gilt für die aus der DE 26 01 731 A1 bekannten Anordnung.

Aus EP 0 989 311 A ist eine Schraube mit am Schraubenkopf angeformten Federelement bekannt, welches ein Verlieren des Federelements verhindert und dazu dient, die Schraubenvorspannung auch bei Setzungserscheinungen zu erhaften. Nachteilig an dieser Ausführungsform ist jedoch, dass das so ausgebildete Federelement eine sehr steile Federkennlinie aufweist, die unter anderem dadurch verstärkt wird, dass das Federelement an seinem Innendurchmesser mit dem Schraubenkopf verbunden ist und auf diese Weise in seiner Elastizität verringert wird. Eine solche steife Federkennlinie ist jedoch für viele Anwendungen ungeeignet, da sie erst bei hohen Schraubenanzugskräften die gewünschte elastische Wirkung entfaltet und folglich bei den niedrigeren Schraubenanzugskräften, beispielsweise bei Befestigung der Schraube in weicheren Werkstoffen, die gewünschte Losdrehsicherung nicht bereitstellen kann.

Aus US 4,350,465 Ist eine Schraube mit mehreren, sich radial erstreckendem Laschen bekannt, die gleichsinnig zueinander verdreht sind. Durch die schlitzförmigen Ausbrüche zwischen den Laschen kann eine flache Federkennlinie erzielt werden. Jedoch weist diese Schraubengestaltung den Nachteil auf, dass die Kanten der einzelnen Laschen Späne oder Partikel vom Werkstück abheben können, was in vielen - insbesondere elektronischen - Anwendungen unerwünscht ist.

Dieses Problem wird durch ein Schraubelement nach Anspruch 1 gelöst.

Das Federelement ist ein zur Schraubachse konzentrischer Ring mit einer durchgehend ringförmigen Werkstück-Anlage. Dann ergibt sich eine progressive Federkennung dadurch, dass beim Herstellen der Schraubverbindung nicht nur Axialkräfte, sondern auch tangentiale Ringkräfte im Federelement entstehen.

Auf diese Weise vergrößert der Federelement-Ansatz am Schraubelement dessen axiale Länge kaum, nämlich nur um denjenigen Betrag, der für den Federweg erforderlich ist. Außerdem eröffnen sich zahlreiche Gestaltungsmöglichkeiten für das Federelement, durch die dessen Federkennlinie je nach Verwendungszweck und Art der Schraubverbindung in erheblichem Umfang verändert werden kann.

Es hängt dann nicht zuletzt von der radialen Erstreckung der zwischen den Vorsprüngen liegenden Federelement-Abschnitte ab, wie die Kraft in Abhängigkeit vom Federweg zunimmt. Bei Schraubverbindungen relativ empfindlicher Werkstücke kann es von erheblichem Vorteil sein, dass das Federelement eine relativ flache Federkennlinie aufweist, so dass ohne allzu große Anzugskräfte beim Herstellen der Schraubverbindung relativ große Längenänderungen namentlich auf Seiten der verbundenen Werkstücke nur zu einem relativ geringen Verlust an Vorspannkraft der Verschraubung führen.

Aus der DE 33 27 587 A1 ist zwar ein Schraubelement (Schraubenkopf oder Schraubenmutter) bekannt, bei dem das angeformte Federelement das Schraubelement radial überragt. Dabei handelt es sich jedoch um einen herkömmlichen spiralförmigen Federring, der nur über einen kleinen Teil seines Umfangs am Schraubelement befestigt und im Übrigen von diesem getrennt außerhalb seines Umfanges liegt. Eine Kraftübertragung findet demzufolge nur an der Befestigungsstelle und somit exzentrisch zur Schraubverbindung statt. Auch hat die Werkstück-Anlageebene des Federelements im Einbauzustand keinen axialen Abstand vom Schraubelement.

Nicht zuletzt aufgrund des Umstandes, dass das Federelement das Schraubelement radial überragt, kann nach einer Weiterbildung der Erfindung dem Federelement eine geringere Härte als dem Schraubelement gegeben werden, etwa durch selektive Wärmebehandlung. Auch andere Differenzierungen der Eigenschaften einerseits des

Schraubelements, andererseits des Federelements lassen sich trotz der Einstückigkeit in Folge der räumlichen Differenzierung bei der Herstellung des Schraubelements relativ einfach erzielen.

Soweit es sich bei dem Schraubelement um eine Schraube handelt, kann diese gewindeformend und ggf. selbstbohrend ausgebildet sein.

Die erfindungsgemäße Ausgestaltung des Federelements lässt ferner eine Schraubverbindung zweier Werkstücke, von denen mindestens eines ein Metallblech oder ein Kunststoffelement ist, derart zu, dass nur das Federelement und dieses mit einer vorbestimmten Vorspannkraft am angrenzenden Werkstück anliegt.

Die Zeichnung veranschaulicht Ausführungsbeispiele der Erfindung. Dann zeigt:
- Figur 1: in teilweise geschnittener Seitenansicht eine erfindungsgemäße Schraube mit einem Werkzeug-Inneneingriff im Kopf;
- Figur 2: eine der Figur 1 entsprechende Darstellung einer weitgehend gleichen Schraube, jedoch mit Werkzeug-Außenangriff am Kopf;
- Figur 3: eine Draufsicht auf die Schraube in Figur 1;
- Figur 4: eine Draufsicht auf die Schraube in Figur 2;
- Figuren 5 bis 9: der Figur 3 entsprechende Draufsichten auf eine Schraube gemäß Figur 1 mit abgewandelten Federelementen;
- Figuren 10 und 11: Darstellungen gemäß Figur 1 von Schrauben mit weiter abgewandelten Federelementen;
- Figur 12: eine Ansicht der Schraube gemäß Figur 10 von oben;
- Figur 13: eine Ansicht der Schraube gemäß Figur 11 von oben;
- Figur 14: eine der Figur 13 entsprechende Darstellung eines abgewandelten Federelements;
- Figur 15: eine Darstellung gemäß Figur 1 mit einem ähnlich Figur 13 abgewandelten Federelement;
- Figuren 16 und 17: Ansichten des Federelements gemäß Figur 15 von unten;
- Figur 18: eine der Figur 2 entsprechende Darstellung einer Schraube mit einem veränderten Federelement; und
- Figuren 19 bis 22: Draufsichten auf die Schraube der Figur 18 mit unterschiedlichen Ausbildungen ihres Federelements.

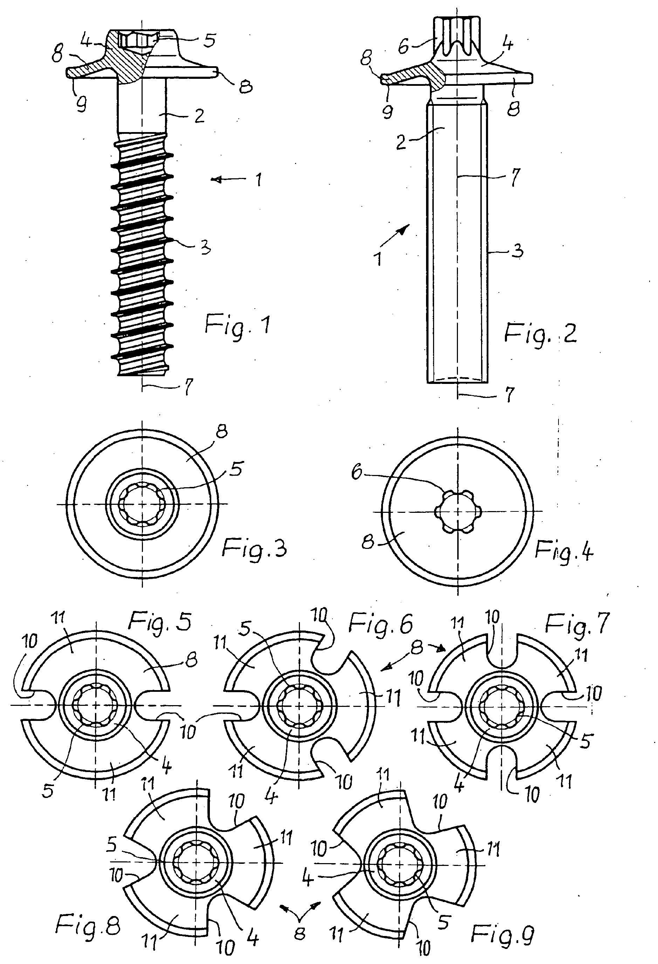

Alle Schrauben 1 haben einen Schaft 2 und ein Gewinde 3 sowie einen Kopf 4. Der für die Herstellung der Schraubverbindung erforderliche Werkzeugangriff ist im Falle der Schrauben gemäß Figuren 1, 10, 11 und 15 ein Innenangriff 5, im Falle der Schraube gemäß Figur 2 (bei der das Gewinde 3 nicht ausgebildet dargestellt ist) jedoch ein Außenangriff 6. Für die Erfindung hat die Wahl eines Innen- oder Außenangriffs keine Bedeutung. Ferner kann es sich beim Schraubelement auch um eine Schraubenmutter handeln.

Mit dem Kopf 4 (oder einer Schraubenmutter) ist in allen Fällen ein Federelement 8 einstückig verbunden und überragt ihn mit Bezug auf die Achse 7 radial. Außerdem hat die Werkstück-Anlagefläche 9, die in den Fällen der Schraube 1 gemäß Figuren 1 bis 4 ringförmig ist, einen gewissen Abstand vom Kopf 4 in Richtung der Achse 7. Durch die Gestaltung der Anlage 9 lässt sich die Federkennlinie des Federelements 8 und die Flächenpressung beim Anziehen der Schraubverbindung in relativ weiten Grenzen - je nach Anforderung der Schraubverbindung - variieren.

Die Werkstück-Anlage 9 des Federelements 8 ist - wie gesagt - bei den in den Figuren 3 und 4 dargestellten Ausbildungen des Federelements 8 ringförmig, so dass beim Anziehen der Schraubverbindung und damit dem achsparallelen Ausfedern des Federelements 8 wegen der damit einhergehenden Umfangsvergrößerung eine die Federkennung verstärkende Umfangsspannung im Federelement 8 auftritt. Diese Umfangsspannung ist geringer, wenn gemäß den Figuren 5 bis 9 das Federelement 8 durch radiale Einschnitte 10 unterbrochen ist, so dass das Federelement 8 aus einer Mehrzahl von radialen, pratzenartigen Vorsprüngen 11 besteht, die jeweils nur einen Abschnitt der Werkstück-Anlage 9 aufweisen. Im Falle der Figuren 5 bis 7 handelt es sich um im Wesentlichen U-förmige Einschnitte 10, und zwar um zwei (Figur 5), drei (Figur 6) und vier (Figur 7) Einschnitte, so dass entsprechend zwei, drei bzw. vier Vorsprünge 11 entstanden sind.

Die Federelemente 8 gemäß den Figuren 8 und 9 unterscheiden sich vom Ausführungsbeispiel der Figur 6 dadurch, dass die Einschnitte 10 nicht U-förmig sind, sondern einen spitz- bis rechtwinkligen Zuschnitt haben, wodurch sich der Abschnitt der Werkstück-Anlage jedes Vorsprunges 11 entsprechend verringert.

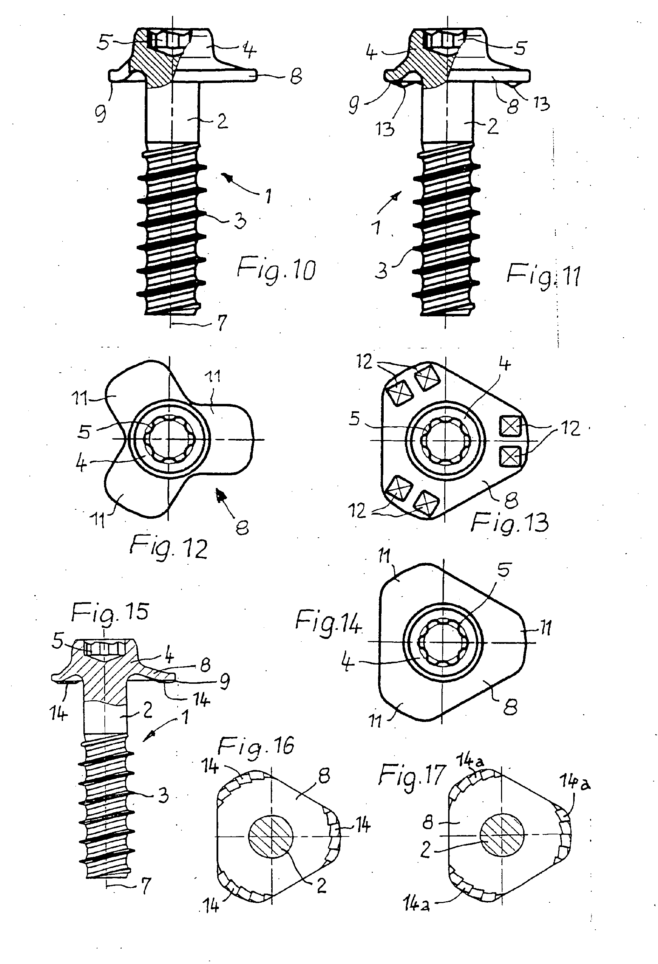

Während die Federelemente 8 der in Figuren 3 bis 9 dargestellten Ausbildungen einen Kreis als Grundform haben, gilt dies für die Ausführungsformen der Figuren 10 bis 14 nicht. Vielmehr sind dort durch Ausstanzen (Abgraten) bzw. entsprechende Steuerung der Umformung im Falle der Ausführungsform gemäß den Figuren 10 und 12 Federelemente 8 mit abgerundet rechteckigen Vorsprüngen 11 sowie im Falle der Figuren 11, 13 und 14 Federelemente 8 von einer abgerundet dreieckigen Grundform entstanden. Es liegt auf der Hand, dass die Federkennlinie der Federelemente 8 gemäß Figuren 13 und 14 gegenüber derjenigen des Federelements 8 gemäß Figur 12 ebenso, wenn auch weniger steiler ist wie diejenige der Federelemente 8 gemäß den Figuren 3 und 4 gegenüber denjenigen der Federelemente 8 der Figuren 5 bis 9.

Beim Federelement 8 gemäß Figur 13 ist gezeigt, dass diamantförmige Einprägungen 12 in das Federelement 8 im Bereich der Werkstück-Anlage 9 Vorsprünge 13 erzeugen (Figur 11), welche eine formschlüssige Verklammerung des Federelements 8 im angrenzenden Werkstück hervorrufen, wenn die Schraubverbindung hergestellt wird.

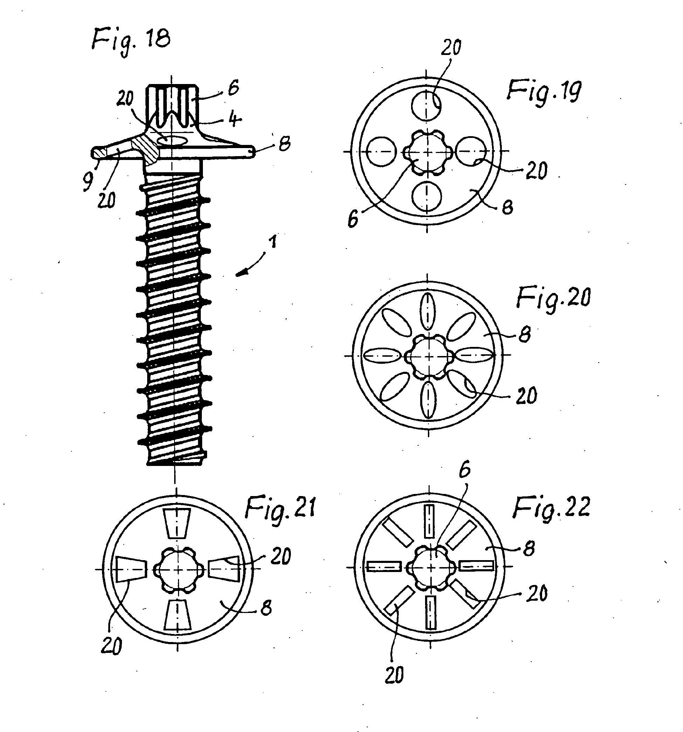

Eine andere Profilierung des Auflagefläche (Werkstück-Anlagefläche 9) des Federelements 8, welche ebenfalls dem Aufkratzen einer Farb- oder sonstigen Beschichtung des Werkstücks, der elektrischen Kontaktsicherung (z. B. Erdung) oder Sperren der Verschraubung gegen Lösen dienen kann, zeigen die Figuren 15 bis 17. Für das in Figur 15 dargestellte Rechtsgewinde ist die Verzahnung 14 eine Sprerrverzahnung (Figur 16) und die Verzahnung 14a in Figur 17 eine Reib-Verzahnung.

Das Federelement 8 der Schraube 1 gemäß Figur 18 entspricht grundsätzlich dem der in Figur 2 dargestellten Schraube. Es hat die gleiche ringförmige Werkstück-Anlage 9, jedoch ist der zwischen ihr und dem Kopf 4 der Schraube befindliche Ringbereich des Federelements 8 durchbrochen, wodurch sich dessen Federkennlinie verändert. Die gleichmäßig über den Umfang des Ringbereichs verteilten Durchbrüche 20 können unterschiedlich konfiguriert, insbesondere rund (Figuren 19 und 20) oder eckig und beispielsweise durch Ausstanzen (vor einer abschließenden Wärmebehandlung) hergestellt sein.

## Patentansprüche

1. Schraubelement mit einem Werkzeugangriff (5, 6) und einem koaxial zur Schraubachse (7) einstückig angeformten Federelement (8), das mit seinem freien Rand eine zur Schraubachse senkrechte Werkstück-Anlageebene definiert, die einen axialen Abstand vom Schraubelement (1) aufweist, wobei das Federelement (8) ein zur Schraubachse (7) konzentrischer Ring mit einer durchgehend ringförmigen Werkstück-Anlage (9) ist, an der Peripherie des Schraubelements, also eines Schraubenkopfes (4) oder einer Schraubenmutter ansetzt, die Peripherie radial überragt und eine außerhalb der Peripherie liegende, zur Schraubachse (7) konzentrische Werkstück-Anlage (9) bildet,
**dadurch gekennzeichnet, dass** der das Federelement (8) bildende Ring mehrere, gleichmäßig über seinen Umfang verteilte Durchbrüche (20) aufweist.

2. Schraubelement nach Anspruch 1,
**dadurch gekennzeichnet, dass** das Federelement (8) eine relativ flache Federkennlinie aufweist.

3. Schraubelement nach Anspruch 2,
**dadurch gekennzeichnet, dass** das Federelement (8) ein geringere Härte als das Schraubelement (1) aufweist.

4. Schraubelement nach einem der vorhergehenden Ansprüche,
**dadurch gekennzeichnet, dass** das Federelement (8) im Bereich der Werkstück-Anlage (9) Vorsprünge (13, 14, 14a) aufweist.

5. Schraube (1) mit einem Kopf (4) in Form des Schraubelements nach einem der vorhergehenden Ansprüche,
**dadurch gekennzeichnet, dass** sie gewindeformend und ggf. selbstbohrend ausgebildet ist.

6. Schraubverbindung zweier Werkstücke, von denen mindestens eines ein Metallblech oder ein Kunststoffelement ist, mit einem Schraubelement nach einem der vorhergehenden Ansprüche,
**dadurch gekennzeichnet, dass** nur das Federelement (8) und dieses mit einer vorbestimmten Vorspannkraft am angrenzenden Werkstück anliegt.

## Claims

1. A screw element with a tool application means (5, 6) and a spring element (8) formed thereon as one piece coaxially in relation to the screw axis (7), which spring element defines with its free edge a workpiece-abutment plane which is perpendicular to the screw axis and has an axial spacing from the screw element (1), the spring element (8) being a ring concentric to the screw axis (7), with a continuously annular workpiece-abutment (9), fitting against the periphery of the screw element, i.e. a screw head (4) or a screw nut, projecting radially beyond the periphery, and forming a workpiece-abutment (9) located outside the periphery and concentric to the screw axis (7),
**characterised in that** the ring forming the spring element (8) has several openings (20) distributed uniformly over its periphery.

2. A screw element according to Claim 1,
**characterised in that** the spring element (8) has a relatively flat spring characteristic.

3. A screw element according to Claim 2,
**characterised in that** the spring element (8) is of lower hardness than the screw element (1).

4. A screw element according to one of the preceding claims,
**characterised in that** the spring element (8) has projections (13, 14, 14a) in the region of the workpiece-abutment (9).

5. A screw (1) with a head (4) in the form of the screw element according to one of the preceding claims,
**characterised in that** it is designed so as to be thread-forming and optionally self-tapping.

6. A screw connection of two workpieces, of which at least one is a metal plate or a plastics material element, with a screw element according to one of the preceding claims,
**characterised in that** only the spring element (8), and this with a predetermined prestressing force, abuts the adjoining workpiece.

## Revendications

1. Élément à visser pourvu d'une partie d'attaque à outil (5, 6) et d'un élément ressort (8) conformé d'un seul tenant coaxialement à l'axe de vissage (7), qui définit par son bord libre un plan d'appui de pièce perpendiculaire à l'axe de vissage et présentant une distance axiale à l'élément à visser (1), dans lequel l'élément ressort (8) est un anneau concentrique à l'axe de vissage (7) et présentant une partie d'appui de pièce (9) annulaire continue, part de la périphérie de l'élément à visser, donc d'une tête de vis (4) ou d'un écrou de vis, dépasse radialement au-delà de la périphérie et forme une partie d'appui de pièce (9) située à l'extérieure de la périphérie et concentrique à l'axe de vissage (7),
**caractérisé en ce que** l'anneau formant l'élément ressort (8) présente plusieurs traversées (20) disposées en répartition régulière sur sa périphérie.

2. Élément à visser selon la revendication 1,
**caractérisé en ce que** l'élément ressort (8) présente une courbe caractéristique d'élasticité relativement plate.

3. Élément à visser selon la revendication 2,
**caractérisé en ce que** l'élément ressort (8) présente une dureté inférieure à celle de l'élément à visser (1).

4. Élément à visser selon l'une des revendications précédentes,
**caractérisé en ce que** l'élément ressort (8) comprend des saillies (13, 14, 14a) dans la zone de la partie d'appui de pièce (9).

5. Vis (1) pourvue d'une tête (4) sous la forme d'un élément à visser selon l'une des revendications précédentes,
**caractérisée en ce qu'**elle est réalisée auto-taraudeuse et le cas échéant auto-perceuse.

6. Liaison vissée de deux pièces dont l'une au moins est une tôle métallique ou un élément en matière plastique, comprenant un élément à visser selon l'une des revendications précédentes,
**caractérisée en ce que** seul l'élément ressort (8) s'applique contre la pièce adjacente, et ceci sous une force de précontrainte prédéterminée.
